# FASCICULE DE BREVET EUROPEEN

(11) **EP 2 043 844 B1**
(45) Date de publication et mention de la délivrance du brevet: **13.07.2011**
(21) Numéro de dépôt: 07823632.0
(22) Date de dépôt: 24.07.2007
(51) Int. Cl.: B29C 65/08, B29C 65/22

(54) **DISPOSITIF ET PROCEDE DE SOUDAGE ULTRASONS**
ULTRASCHALLSCHWEISSVORRICHTUNG UND VERFAHREN
ULTRASOUND WELDING DEVICE AND PROCESS

(30) Priorité: 25.07.2006 FR 0653111
(43) Date de publication de la demande: 08.04.2009
(73) Titulaire: Sonimat, 86140 Lencloitre (FR)
(72) Inventeur: VIOLLEAU, Eric, F-86110 CUHON (FR); CHEPPE, Patrick, F-44115 BASSE GOULAINE (FR)
(74) Mandataire: Tanty, François
(86) Numéro de dépôt international: PCT/FR2007/051715
(87) Numéro de publication internationale: WO 2008/012469

(56) Documents cités:
- EP-A- 0 032 703
- DE-A1- 10 123 632
- FR-A1- 2 225 247
- GB-A- 1 120 881
- US-A- 3 505 136
- US-A- 3 679 526

## Description

La présente invention concerne les dispositifs de soudage à ultrasons d'au moins deux feuilles superposées, par exemple pour la fermeture, notamment étanche, d'articles tels que les pochons ou sachets ou l'assemblage de laizes de films.

Le terme « feuille » ne doit pas être compris de façon limitative et englobe divers substrats composites ou non, susceptibles d'une fusion locale sous l'effet de vibrations ultrasonores.

Les dispositifs de soudage à ultrasons comportent, de manière conventionnelle, une sonotrode et une enclume définissant un entrefer à travers lequel les feuilles à souder sont introduites, au moyen d'un système d'entraînement à pinces par exemple.

Il peut s'avérer souhaitable d'avoir une longueur d'entrefer importante, relativement au sens de défilement des feuilles, car cela permet d'augmenter le temps de séjour des feuilles dans l'entrefer ou, à puissance comparable, d'augmenter la vitesse de défilement des feuilles dans l'entrefer et ainsi d'augmenter la cadence de soudage.

Le brevet français FR 2 784 051 divulgue un dispositif de soudage par ultrasons dans lequel l'enclume est fixe et dans lequel l'entrefer présente un profil particulier. L'extrémité de la sonotrode venant au contact des feuilles à souder est orientée longitudinalement, parallèlement à la direction de défilement des feuilles.

Pour réaliser un soudage efficace, il est nécessaire de serrer les feuilles entre la sonotrode et l'enclume, ce qui génère un frottement nécessitant de prévoir un système d'entraînement relativement complexe des sachets ou pochons à travers l'entrefer. Ce système d'entraînement est en outre susceptible de constituer un frein à l'obtention de cadences élevées, et ne permet pas de souder de produit exempt d'une couche non fusible, tel qu'en aluminium par exemple.

Le brevet britannique GB 952 581 divulgue un dispositif de soudage par ultrasons dans lequel l'enclume comporte un galet. Un tel dispositif, s'il diminue le frottement, ne permet pas d'avoir une longueur d'entrefer importante, sauf à accroître le diamètre du galet et donc l'encombrement et le coût du dispositif

Le brevet US 5 830 311 divulgue un dispositif de soudage à ultrasons comportant une pluralité de taquets portés par une bande de convoyage défilant en boucle fermée. Chacun des taquets vient se placer lors du défilement de la bande de convoyage sur le trajet des ultrasons entre la sonotrode et un galet de réaction.

Un tel dispositif, qui ne permet pas d'obtenir une étanchéité, est adapté à sonder deux feuilles en formant des plis, grâce aux taquets. Les ligues de soudure s'étendent ainsi longitudinalement entre les plis, le long des côtés des taquets, perpendiculairement à la direction de déplacement de la bande de convoyage.

La demande FR 2 225 247 A1 divulgue un procédé de soudage à ultrasons selon le préambule de la revendication 1, comportant un ou plusieurs rubans métalliques, non adapté à souder un produit d'emballage étanche.

L'invention vise à perfectionner encore les dispositifs de soudage à ultrasons afin notamment de bénéficier d'un dispositif susceptible de fonctionner à des cadences relativement élevées et qui puisse être relativement compact et peu coûteux, tout en assurant une qualité de soudure tendant à garantir l'étanchéité.

L'invention a ainsi pour objet, selon l'un de ses aspects, un dispositif selon la revendication 1, de soudage à ultrasons d'au moins deux feuilles superposées, notamment afin de réaliser une soudure étanche, comportant:
- au moins une sonotrode pour émettre des ultrasons,
- au moins une pièce de réaction disposée au moins partiellement en regard de la sonotrode,
- au moins une paroi intermédiaire, autre qu'un galet, mobile relativement à l'une au moins de la sonotrode et de la pièce de réaction, cette paroi intermédiaire délimitant an moins partiellement un entrefer dans lequel les feuilles à souder sont introduites, de façon à effectuer au moins une soudure s'étendant parallèlement à la direction de déplacement de la paroi intermédiaire an niveau de l'entrefer.

L'une au moins de la paroi intermédiaire et de la sonotrode présente une section transversale, relativement au sens de déplacement des feuilles, présentant au moins un relief en saillie venant au contact d'au moins une feuille. Ce relief en saillie présente par exemple un profil triangulaire on en dents de scie.

Le profil triangulaire est par exemple réalisé sur la sonotrode, et peut s'étendre sur une région moins large que la paroi intermédiaire.

Le profil en dents de scie est par example réalisé sur la paroi intermédiaire, le nombre de dents étant par exemple compris entre deux et six, sur une largeur inférieure à celle de la face en regard de la sonotrode venant au contact d'une feuille à souder.

Lorsque le relief est réalisé sur la sonotrode, la paroi intermédiaire peut présenter une face plane en regard.

Lorsque le relief est réalisé sur la paroi intermédiaire, la sonotrode peut présenter une face plane en regard. Une section transversale non rectangulaire de la paroi intermédiaire peut être avantageuse en ce qu'elle peut permettre de réaliser la sonotrode avec une face d'extrémité plane, donc de simplifier sa fabrication tout en permettant la maîtrise du fluage de la matière des feuilles.

L' invention a également pour objet un procédé de soudage par ultrasons selon les revendications 14 et 15. L'invention peut accroître les possibilités d'entraînement des articles à souder, en utilisant par exemple des systèmes d'entraînement autres qu'à pinces, par exemple à godets.

Dans un exemple de mise en oeuvre de l'invention, la paroi intermédiaire est mobile an contact de la pièce de réaction. En variante, la paroi intermédiaire est mobile au contact de la sonotrode est dans une variante encore, le dispositif de soudage à ultrasons comporte une première paroi intermédiaire mobile au contact de la pièce de réaction et une deuxième paroi intermédiaire mobile au contact de la sonotrode, l'entrefer étant défini entre ces première et deuxième parois intermédiaires.

La ou chaque paroi intermédiaire peut être définie par une courroie défilant en boucle fermée, cette courroie étant par exemple engagée sur des roues d'extrémité et pouvant être réalisée de manière monolithique, en un métal ou un composite, par exemple. Le composite peut être formé de plusieurs couches adhérant les unes aux autres. Le métal peut avoir reçu un traitement, notamment de surface, de façon à le durcir, par exempte une nitruration.

La pièce de réaction peut comporter, notamment lorsque la paroi intermédiaire défile à son contact, un revêtement destiné à faciliter le glissement de la paroi intermédiaire, par exemple un revêtement d'un polymère fluoré, notamment du polytétrafluoroéthylène.

Le défilement de la paroi intermédiaire peut s'effectuer de manière continue ou par intermittence, étant par exemple synchronisé avec le défilement d'articles à souder, par exemple des sachets ou pochons.

La sonotrode présente une forme généralement effilée, avec une extrémité s'étendant longitudinalement parallèlement à la direction de défilement des feuilles à souder.

La paroi intermédiaire, notamment la courroie, peut présenter une largeur excédant celle de l'extrémité de la sonotrode et/ou celle de la pièce de réaction. Cela peut permettre d'utiliser une portion débordante de la paroi intermédiaire pour effectuer une autre fonction, par exemple un marquage, une gravure, une dépression ou une perforation.

Le dispositif de soudage à ultrasons peut comporter un dispositif de réglage de la tension de la courroie, afin par exemple de maintenir celle-ci constante.

Est encore décrit un dispositif de soudage à ultrasons d'au moins deux feuilles superposées, comportant :
- au moins une sonotrode pour émettre des ultrasons,
- au moins une pièce de réaction fixe disposée au moins partiellement en regard de la sonotrode,
- au moins une courroie mobile relativement à l'une au moins de la sonotrode et de la pièce de réaction, cette courroie délimitent au moins partiellement un entrefer dans lequel les feuilles à souder sont introduites,
la courroie étant mobile avec une survitesse par rapport à la vitesse de déplacement des feuilles.

Est encore décrit un procédé de soudage par ultrasons, comportant l'étape consistant à faire défiler au moins deux feuilles à assembler de manière étanche au contact d'une paroi intermédiaire disposée entre une sonotrode et une pièce de réaction et se déplaçant au contact de l'une de la sonotrode et de la pièce de réaction, autrement qu'avec une mouvement de rotation pure, de manière à réaliser une ligne de soudure s'étendant sensiblement parallèlement à la direction de déplacement de la paroi intermédiaire. Cette dernière peut se déplacer avec une survitesse, par exemple de l'ordre de 3 à 10 %, compensant ainsi l'allongement de la matière provoqué par la fusion et la diminution de l'épaisseur de la matière.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 est une vue schématique, en perspective, d'un exemple de dispositif de soudage à ultrasons réalisé conformément à l'invention,
- la figure 2 est une vue analogue à la figure 1, selon un autre angle de vue,
- la figure 3 est une perspective éclatée du dispositif des figures 1 et 2,
- la figure 4 est une vue de face, selon la flèche IV de la figure 1,
- la figure 5 est une coupe selon V-V de la figure 4,
- la figure 6 est une section transversale au niveau de l'entrefer,
- la figure 7 est une vue analogue à la figure 6, selon une variante de mise en oeuvre de l'invention,

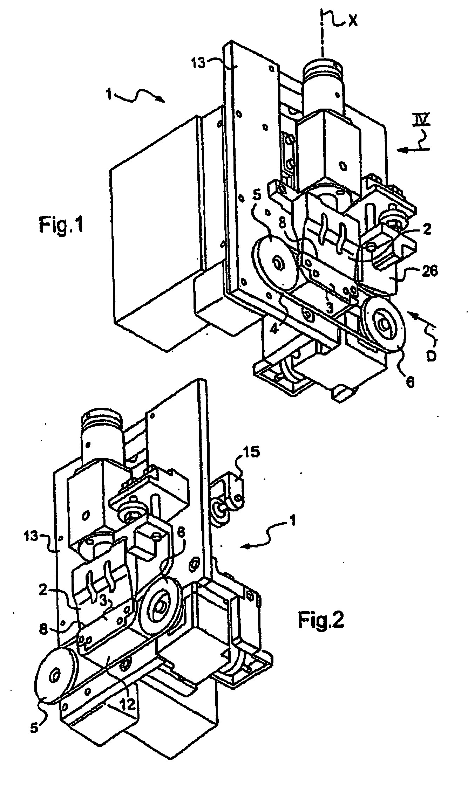

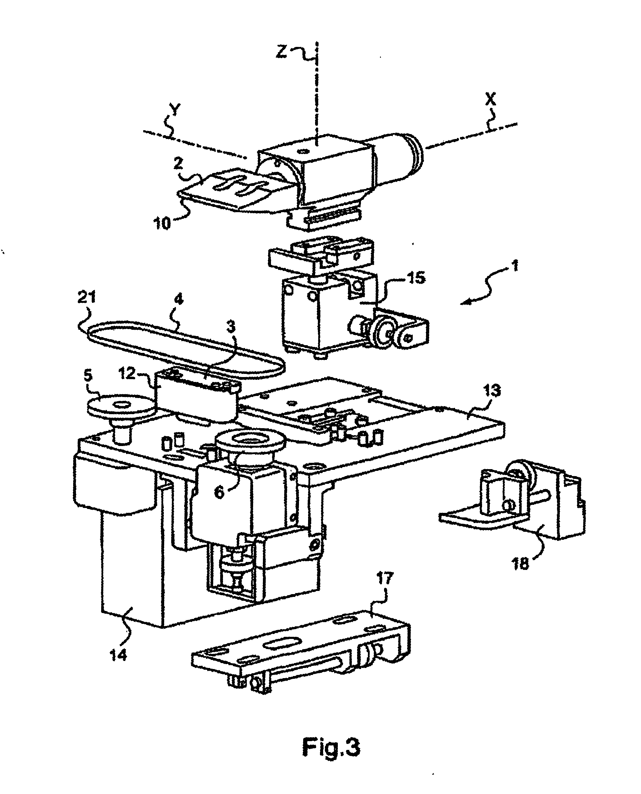

Le dispositif de soudage à ultrasons 1 représenté sur les figures 1 à 6 comporte une sonotrode 2 d'axe X disposée en regard d'une pièce de réaction 3.

La fréquence d'excitation de la sonotrode est par exemple comprise entre 20 et 40 kHz, celle-ci pouvant être choisie en fonction notamment de la nature des feuilles à souder.

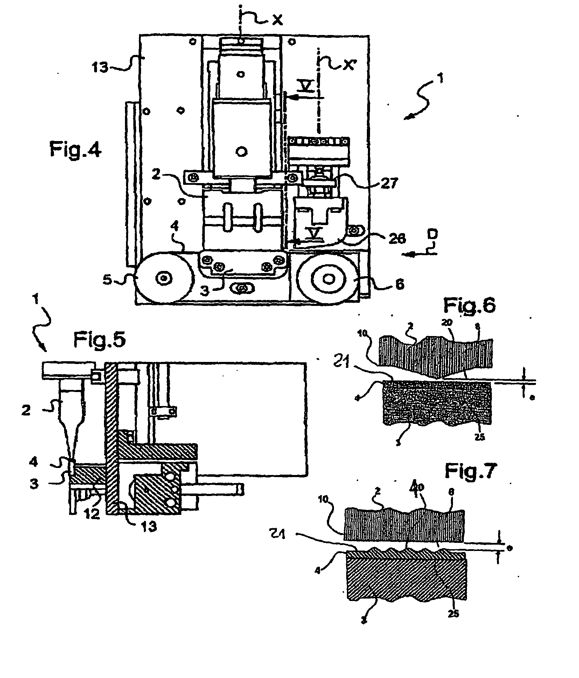

Une paroi intermédiaire 4 formant enclume, se présentant sous la forme d'une courroie tournant sur deux roues 5 et 6, défile entre la sonotrode 2 et la pièce de réaction 3, de façon à définir avec la sonotrode 2, comme illustré à la figure 6, un entrefer 8 d'épaisseur e au travers duquel peuvent être introduites, dans le sens de défilement D de la courroie 4 au moins deux feuilles à souder de manière étanche. Il peut s'agir par exemple de deux feuilles d'un sachet ou d'un pochon à fermer.

L'épaisseur e de l'entrefer peut être choisie en fonction de la soudure à former, étant de préférence toujours inférieure dans la zone de soudure aux épaisseurs cumulées des deux feuilles au moins à assembler.

Dans l'exemple de la figure 6, la face de la sonotrode en regard des feuilles à souder présente un profil triangulaire, d'angle au sommet par exemple compris entre 90 et 170°.

La largeur du profil triangulaire est par exemple comprise entre 0,5 et 10 mm.

Dans l'exemple considéré, la sonotrode 2 présente une extrémité 10 qui est allongée selon un axe longitudinal Y perpendiculaire à l'axe X et sensiblement parallèle à la direction D de défilement de la courroie 4 au niveau de l'entrefer 8.

L'arête 20 du sommet s'étend par exemple, parallèlement au sens de défilement des feuilles, sur une distance comprise entre 50 et 250 mm.

La pièce de réaction 3 est fixée sur un support 12 la reliant rigidement à un bâti 13. Ce dernier peut supporter un bloc moteur 14 assurant l'entraînement en rotation de l'une au moins des roues 5 et 6, par exemple avec une légère survitesse qui peut être de l'ordre de 3 à 10 %, par rapport à la vitesse de défilement des feuilles dans l'entrefer 8, de façon à réduire le risque de formation de plis entre ces feuilles dans la zone de soudure ainsi qu'à compenser l'allongement de la matière du à la fusion et à la diminution de l'épaisseur.

L'entraînement de la courroie 4 peut être asservi, le cas échéant, à la vitesse de défilement des articles, avec différentiel de vitesse.

Un tel asservissement présente l'avantage de pouvoir accompagner le passage des feuilles quel que soit leur mouvement, par exemple avec une vitesse constante, variant de façon sinusoïdale ou autre ou variant de façon intermittente.

La sonotrode 2 peut être montée sur le bâti 13 par l'intermédiaire d'un premier mécanisme de réglage 15 qui permet de régler son orientation autour d'un axe de rotation Z perpendiculaire aux axes X et Y, afin par exemple de faciliter l'accès des articles dans l'entrefer. La sonotrode 2 peut également être montée de façon réglable en translation selon son axe X relativement au bâti 13 par l'intermédiaire d'un deuxième mécanisme de réglage 17, afin de régler la valeur de l'entrefer.

Le cas échéant, la sonotrode 2 peut être déplacée par un système d'entraînement permettant de modifier la valeur de l'entrefer en réponse à une action de commande, afin par exemple de réguler au moins un paramètre de fonctionnement.

Le dispositif de soudage à ultrasons 1 peut par exemple être utilisé avec l'axe Y horizontal et les axes de rotation des roues 5 et 6 verticaux. Bien entendu, l'invention n'est pas limitée à une orientation particulière du dispositif de soudage 1, celle-ci pouvant être choisie en fonction de la nature des articles à souder et de l'environnement dans lequel est placé le dispositif.

Dans l'exemple considéré, la courroie 4 est métallique, étant réalisée avec une face extérieure 21 lisse, notamment au niveau de la jonction assurant sa fermeture sur elle-même, afin de ne pas introduire une variation de la valeur de l'entrefer lors de son défilement entre la sonotrode 2 et la pièce de réaction 3.

Dans l'exemple de la figure 6, la courroie 4 présente une section transversale rectangulaire.

L'invention n'est toutefois pas limitée à une paroi intermédiaire particulière et la courroie 4 peut notamment présenter un relief en saillie, comme illustré à la figure 7. Le cas échéant, la surface extérieure de la courroie 4 peut être gravée ou érodée, afin par exemple de réaliser un motif sur la zone de soudure.

Dans cet exemple, la face 21 de la courroie 4 tournée vers l'entrefer présente un profil en dents de scie, avec par exemple cinq dents 40.

La face en regard de l'extrémité de la sonotrode peut être plane.

La hauteur des dents est par exemple comprise entre 0,05 et 2 mm et leur écartement, mesuré entre les sommets de deux dents consécutives, est par exemple compris entre 0,2 et 10 mm.

La courroie 4 est par exemple réalisée dans un acier mais de façon plus générale sa matière, ses dimensions, sa forme et son état de surface pourront varier en fonction de la soudure à réaliser.

La courroie 4 présente avantageusement une épaisseur relativement faible, par exemple comprise entre 0,1 et 6 mm, mieux 0,1 et 4 mm, encore mieux 0,1 et 2 mm, de façon à présenter la souplesse suffisante pour circuler entre les roues 5 et 6.

La courroie 4 peut présenter diverses autres formes en section, notamment non rectangulaires. Une forme non rectangulaire, par exemple circulaire ou triangulaire, peut permettre de réaliser la sonotrode avec une face plane, le fluage de la matière étant alors assuré par la géométrie de la courroie. Cela peut simplifier la fabrication de la sonotrode, et permet d'assurer la fonction de fluage favorable à l'obtention d'une soudure étanche.

La tension de la courroie dans l'exemple considéré est comprise entre 0.8 N et 50 N, cette tension pouvant dépendre par exemple du type de courroie, de sa matière, du diamètre d'enroulement et des frottements exercés sur celle-ci.

La pièce de réaction 3 est de préférence réalisée dans un matériau de grande dureté, par exemple un acier nitruré ou encore différents alliages, en variante.

Avantageusement, la pièce de réaction 3 reçoit sur sa face 25 au contact de la courroie 4 un traitement de surface destiné à réduire le frottement avec la courroie 4, par exemple un revêtement d'un polymère fluoré, notamment du polytétrafluoroéthylène.

Le dispositif de soudage 1 peut comporter un capteur non représenté détectant une rupture de la courroie 4 afin d'interrompre dans ce cas le fonctionnement du dispositif.

La puissance électrique d'excitation de la sonotrode peut être réglable et asservie à au moins un paramètre de fonctionnement, le cas échéant, afin de maintenir la qualité de la soudure effectuée.

L'invention n'est pas limitée aux exemples décrits et les particularités de réalisation ci-dessus peuvent se combiner au sein de variantes non illustrées.

La forme de la sonotrode 2 peut être choisie en fonction des articles à souder et l'invention n'est pas limitée à la forme illustrée.

La paroi intermédiaire peut venir en regard de plus d'une sonotrode et d'une pièce de réaction, le cas échéant.

Un moyen de chauffage de la paroi intermédiaire, par courants de Foucault, rayonnement infrarouge ou effet Joule, peut être prévu, le cas échéant.

La paroi intermédiaire peut encore être réalisée sous la forme d'une portion d'une bande articulée, d'une plaque unique ou d'une plaque d'un ensemble de plaques mises bout à bout.

L'expression « comportant un » doit être comprise comme étant synonyme de « comportant au moins un » sauf si le contraire est spécifié.

## Revendications

1. Dispositif (1) de soudage à ultrasons d'au moins deux feuilles superposées, comportant:
- au moins une sonotrode (2) pour émettre des ultrasons,
- au moins une pièce de réaction (3) disposée au moins partiellement en regard de la sonotrode,
- au moins une paroi intermédiaire (4) autre qu'un galet, mobile relativement à l'une au moins de la sonotrode (2) et de la pièce de réaction (3), cette paroi intermédiaire délimitant au moins partiellement un entrefer (8) dans lequel les feuilles à souder sont introduites de façon à effectuer au moins une soudure s'étendant parallèlement à la direction (D) de déplacement de la paroi intermédiaire au niveau de l'entrefer,
dispositif **caractérisé par le fait que** l'une au moins de la paroi intermédiaire et de la sonotrode présente une section transversale, relativement au sens de déplacement des feuilles, présentant au moins un relief en saillie vers l'entrefer, venant au contact d'au moins une feuille, la sonotrode (2) présentant une forme généralement effilée, avec une extrémité (10) s'étendant longitudinalement sensiblement parallèlement à la direction (D) de défilement des feuilles à souder de manière étanche.

2. Dispositif selon la revendication 1, la paroi intermédiaire comportant au moins un relief en saillie vers l'entrefer.

3. Dispositif selon l'une des revendications 1 et 2, la sonotrode comportant au moins un relief en saillie vers l'entrefer.

4. Dispositif selon l'une quelconque des revendications précédentes, la paroi intermédiaire (4) étant définie par une courroie.

5. Dispositif selon la revendication 4, la courroie (4) présentant une section transversale non rectangulaire.

6. Dispositif selon la revendication 4 ou 5, la courroie (4) étant réalisée de manière monolithique en métal ou en un composite.

7. Dispositif selon l'une quelconque des revendications précédentes, la pièce de réaction (3) comportant, alors que la paroi intermédiaire (4) défile à son contact, un revêtement destiné à faciliter le glissement de la paroi intermédiaire.

8. Dispositif selon la revendication 7, la pièce de réaction comportant un revêtement d'un polymère fluoré.

9. Dispositif selon la revendication 1, la paroi intermédiaire (4) présentant une largeur excédant celle de l'extrémité (10) de la sonotrode.

10. Dispositif selon la revendication 1, la paroi intermédiaire étant déplacée en survitesse par rapport à la vitesse de déplacement des feuilles à souder dans l'entrefer.

11. Dispositif selon l'une quelconque des revendications 1 à 10, le défilement de la paroi intermédiaire étant continu.

12. Dispositif selon l'une quelconque des revendications 1 à 11, le défilement de la paroi intermédiaire étant asservi au défilement des feuilles.

13. Dispositif selon l'une quelconque des revendications 1 à 12, la puissance électrique d'excitation de la sonotrode étant réglable et asservie à au moins un paramètre de fonctionnement afin de maintenir la qualité de la soudure effectuée.

14. Procédé de soudage par ultrasons à l'aide d'un dispositif selon la revendication 1, comportant l'étape consistant à faire défiler au moins deux feuilles à assembler au contact de la paroi intermédiaire disposée entre la sonotrode et la pièce de réaction, la paroi intermédiaire se déplaçant au contact de l'une de la sonotrode et de la pièce de réaction autrement qu'avec un mouvement de rotation pure, de manière à réaliser une ligne de soudure étanche s'étendant sensiblement parallèlement à la direction de déplacement, l'une au moins de la paroi intermédiaire et de la sonotrode présentent une section transversale, vis-à-vis du sens de déplacement des feuilles, comportant au moins un relief en saillie venant au contact d'une feuille au moins.

15. Procédé de soudage par ultrasons avec un dispositif selon la revendication 1, comportant l'étape consistant à faire défiler au moins deux feuilles à assembler au contact de la paroi intermédiaire disposée entre la sonotrode et la pièce de réaction, la paroi intermédiaire se déplaçant au contact de l'une de la sonotrode et de la pièce de réaction autrement qu'avec un mouvement de rotation pure, de manière à réaliser une ligne de soudure étanche s'étendant sensiblement parallèlement à la direction de déplacement, dans lequel la paroi intermédiaire est déplacée en survitesse par rapport à la vitesse de déplacement des feuilles à souder dans l'entrefer.

## Claims

1. A device (1) for the ultrasonic welding of at least two superposed sheets, comprising:
- at least one sonotrode (2) for emitting ultrasounds,
- at least one reaction piece (3) placed at least partially facing the sonotrode,
- at least one intermediate wall (4) other than a roller, that can be moved relative to at least one of the sonotrode (2) and the reaction piece (3), this intermediate wall delimiting at least partially an air gap (8) in which the sheets to be welded are inserted so as to make at least one weld extending parallel to the direction (D) of movement of the intermediate wall at the air gap,
a device in which at least one of the intermediate wall and the sonotrode has a cross section, relative to the direction of movement of the sheets, having at least one raised element protruding toward the air gap, coming into contact with at least one sheet, the sonotrode (2) having a generally tapered shape, with one end (10) extending longitudinally substantially parallel to the direction (D) of travel of the sheets to be sealed welded.

2. The device as claimed in claim 1, the intermediate wall comprising at least one raised element protruding toward the air gap.

3. The device as claimed in any one of claims 1 and 2, the sonotrode comprising at least one raised element protruding toward the air gap.

4. The device as claimed in any one of the preceding claims, the intermediate wall (4) being defined by a belt.

5. The device as claimed in claim 4, the belt (4) having a nonrectangular cross section.

6. The device as claimed in claim 4 or 5, the belt (4) being made in one piece of metal or of a composite.

7. The device as claimed in any one of the preceding claims, the reaction piece (3) comprising, while the intermediate wall (4) travels to make contact with it, a coating designed to make the intermediate wall slide more easily.

8. The device as claimed in claim 7, the reaction piece comprising a coating of a fluorinated polymer.

9. The device as claimed in claim 1, the intermediate wall (4) having a width exceeding that of the end (10) of the sonotrode.

10. The device as claimed in claim 1, the intermediate wall being moved at a speed greater than the speed of movement of the sheets to be welded in the air gap.

11. The device as claimed in any one of claims 1 to 10, the traveling of the intermediate wall being continuos.

12. The device as claimed in any one of claims 1 to 11, the traveling of the intermediate wall being slaved to the traveling of the sheets.

13. The device as claimed in any one of claims 1 to 12, the electric excitation power of the sonotrode being adjustable and slaved to at least one operating parameter, as appropriate, in order to maintain the quality of the weld made.

14. An ultrasonic welding method with a device as claimed in claim 1, comprising the step consisting in causing to travel at least two sheets to be assembled in contact with the intermediate wall placed between the sonotrode and the reaction piece, the intermediate wall moving in contact with one of the sonotrode and the reaction piece other than with a purely rotary movement, so as to produce a sealed weld line extending substantially parallel to the direction of movement; at least one of the intermediate wall and the sonotrode have a cross section, with respect to the direction of movement of the sheets, comprising at least one raised protruding element coming into contact with at least one sheet.

15. An ultrasonic welding method with a device as claimed in claim 1, comprising the step consisting in causing to travel at least two sheets to be assembled in contact with the intermediate wall placed between the sonotrode and the reaction piece, the intermediate wall moving in contact with one of the sonotrode and the reaction piece other than with a purely rotary movement, so as to produce a sealed weld line extending substantially parallel to the direction of movement, wherein the intermediate wall is moved at a speed greater than the speed of movement of the sheets to be welded in the air gap.

## Patentansprüche

1. Vorrichtung (1) zum Ultraschallschweißen von mindestens zwei übereinander liegenden Folien, umfassend:
- mindestens eine Sonotrode (2) für die Ausgabe des Ultraschalls,
- mindestens ein Reaktionsteil (3), das mindestens teilweise gegenüber der Sonotrode angeordnet ist,
- mindestens eine Zwischenwand (4), die keine Rolle ist, beweglich gegenüber mindestens entweder der Sonotrode (2) oder dem Reaktionsteil (3), wobei diese Zwischenwand mindestens teilweise einen Luftspalt (8) begrenzt, in den die zu schweißenden Folien eingebracht werden, so dass mindestens eine Schweißung erfolgt, die sich parallel zur Verfahrrichtung (D) der Zwischenwand am Luftspalt erstreckt,
Vorrichtung **dadurch gekennzeichnet, dass** mindestens entweder die Zwischenwand oder die Sonotrode einen Querschnitt, zur Verfahrrichtung der Folien gesehen, besitzen, der mindestens eine hervorstehende Erhöhung zum Luftspalt hin aufweist, die mit mindestens einer Folie in Kontakt kommt, wobei die Sonotrode (2) eine im Allgemeinen spitz zulaufende Form aufweist und ein Ende (10) hat, das sich in Längsrichtung im Wesentlichen parallel zur Verfahrrichtung (D) der dichtzuschweißenden Folien bewegt.

2. Vorrichtung gemäß dem Anspruch 1, bei der die Zwischenwand mindestens eine zum Luftspalt hin hervorstehende Erhöhung umfasst.

3. Vorrichtung gemäß einem der Ansprüche 1 und 2, bei der die Sonotrode mindestens eine zum Luftspalt hin hervorstehende Erhöhung umfasst.

4. Vorrichtung gemäß einem der vorstehenden Ansprüche, bei der die Zwischenwand (4) durch einen Riemen festgelegt ist.

5. Vorrichtung gemäß dem Anspruch 4, bei der der Riemen (4) einen nicht rechtwinkeligen Querschnitt besitzt.

6. Vorrichtung gemäß Anspruch 4 oder 5, bei der der Riemen (4) monolithisch aus Metall oder aus einem Verbundwerkstoff hergestellt ist.

7. Vorrichtung gemäß einem der vorstehenden Ansprüche, bei der das Reaktionsteil (3) - da die Zwischenwand (4) im Kontakt mit ihm vorbeifährt - eine Beschichtung aufweist, die das Gleiten der Zwischenwand erleichtert.

8. Vorrichtung gemäß dem Anspruch 7, bei der das Reaktionsteil eine Beschichtung aus fluoriertem Polymer besitzt.

9. Vorrichtung gemäß dem Anspruch 1, bei der die Zwischenwand (4) eine Breite besitzt, die größer ist als die Breite des Endes (10) der Sonotrode.

10. Vorrichtung gemäß dem Anspruch 1, bei der die Zwischenwand mit einer Geschwindigkeit verfährt, die größer ist als die Geschwindigkeit, mit der die zu schweißenden Folien im Luftspalt verfahren.

11. Vorrichtung gemäß einem der Ansprüche 1 bis 10, bei der das Verfahren der Zwischenwand kontinuierlich erfolgt.

12. Vorrichtung gemäß einem der Ansprüche 1 bis 11, bei der die Verfahrbewegung der Zwischenwand an die Verfahrbewegung der Folien gekoppelt ist.

13. Vorrichtung gemäß einem der Ansprüche 1 bis 12, bei der die elektrische Erregungsleistung der Sonotrode einstellbar ist und von mindestens einem Funktionsparameter geregelt wird, um die Qualität der durchgeführten Schweißung aufrechtzuerhalten.

14. Verfahren zum Ultraschallschweißen mit Hilfe einer Vorrichtung gemäß dem Anspruch 1, das einen Schritt umfasst, der darin besteht, dass mindestens zwei zu verbindende Folien im Kontakt mit der zwischen der Sonotrode und dem Reaktionsteil angeordneten Zwischenwand verfahren, wobei die Zwischenwand im Kontakt mit entweder der Sonotrode oder dem Reaktionsteil verfährt, und zwar auf eine andere Weise als mit einer reinen Drehbewegung, so dass eine dichte Schweißlinie entsteht die sich im Wesentlichen parallel zur Verfahrrichtung erstreckt, wobei mindestens entweder die Zwischenwand oder die Sonotrode einen Querschnitt gegenüber der Verfahrrichtung der Folien aufweisen, der mindestens eine hervorstehende Erhöhung aufweist, die mit mindestens einer Folie in Kontakt kommt.

15. Verfahren zum Ultraschallschweißen mit einer Vorrichtung gemäß dem Anspruch 1, das einen Schritt umfasst, der darin besteht, dass mindestens zwei zu verbindende Folien im Kontakt mit der zwischen der Sonotrode und dem Reaktionsteil angeordneten Zwischenwand verfahren, wobei die Zwischenwand im Kontakt mit entweder der Sonotrode oder dem Reaktionsteil verfährt, und zwar auf eine andere Weise als mit einer reinen Drehbewegung, so dass eine dichte Schweißlinie entsteht, die sich im Wesentlichen parallel zur Verfahrrichtung erstreckt, wobei die Zwischenwand mit einer Geschwindigkeit verfährt, die größer ist als die Geschwindigkeit, mit der die zu schweißenden Folien im Luftspalt verfahren.
